# EUROPÄISCHE PATENTANMELDUNG

(11) **EP 2 987 835 A1**
(43) Veröffentlichungstag der Anmeldung: **24.02.2016**
(21) Anmeldenummer: 14181875.7
(22) Anmeldetag: 22.08.2014
(51) Int. Cl.: C09D 4/00, C09D 183/04

(54) **Hybridhärtung von wässrigen Silansystemen**

(71) Anmelder: Evonik Degussa GmbH, 45128 Essen (DE)
(72) Erfinder: Albert, Phillipp, 79539 Lörrach (DE)

(57) **Zusammenfassung**

Die vorliegende Erfindung betrifft eine wässrige Zusammensetzung basierend auf mindestens einer wässrigen Polyisocyanat Dispersion, die einen pH-Wert ≤ 7 aufweist, und mindestens einem wässrigen Silansystemen (hier auch als Sol-Gel- oder Hydrosil-Systeme bezeichnet), wobei die gesamte Zusammensetzung einen pH-Wert ≤ 7 aufweist. Ferner betrifft die vorliegende Erfindung die Verwendung solcher Zusammensetzungen sowie Produkte, die eine Beschichtung aufweisen, welche auf einer solchen Zusammensetzung basieren.

## Beschreibung

Die vorliegende Erfindung betrifft eine wässrige Zusammensetzung basierend auf mindestens einer wässrigen Polyisocyanat Dispersion, die einen pH-Wert ≤ 7 aufweist, und mindestens einem wässrigen Silansystemen (nachfolgend auch als Sol-Gel-Systeme oder als Hydrosil-Systeme bezeichnet), wobei die gesamte Zusammensetzung einen pH-Wert ≤ 7 aufweist. Ferner betrifft die vorliegende Erfindung die Verwendung solcher Zusammensetzungen sowie Produkte, die eine Beschichtung aufweisen, welche auf einer solchen Zusammensetzung basieren.

Wasserbasierende Coatingsysteme finden immer mehr Anwendungen, da sie umweltfreundlich sind. Darüber hinaus kann sowohl bei der Herstellung als auch bei der Anwendung der technische Aufwand gering gehalten werden, da aufgrund der geringen VOC-Emission keine speziellen technischen Sicherheitsvorkehrungen notwendig sind und keine Lösungsmittel abgesaugt werden müssen.

Obwohl das Prinzip der reversiblen Blockierung freier Isocyanate schon seit über 70 Jahren bekannt ist, erlangen geblockte Isocyanate erst in den letzten 20 Jahren eine gewisse Bedeutung.
Durch die Blockierung der Isocyanate wird die Reaktivität der Isocyanate soweit reduziert, dass aus ihnen stabile wässrige Dispersionen hergestellt werden können. Darüber hinaus können aus 2K-Systemen 1K-Systeme hergestellt werden. Allerdings sind bei diesen 1K-Systemen höheren Temperaturen zur Härtung erforderlich. Kommerzielle Produkte sind beispielsweise unter Bayhydrol®, Crelan® (Bayer), Coronat® (Nippon Polyurethane), Vestanat® (Evonik), Takenat® (Takeda) oder Duranat® (Asahi) erhältlich.

Nicht nur umweltfreundliche Coatingsysteme, sondern auch umweltfreundliche Metallvorbehandlungen werden zunehmend eingesetzt, um die Umweltbelastung gering zu halten. Aber auch bei dieser Anwendung kann der technische Aufwand durch umweltfreundliche Systeme reduziert und damit umweltfreundlich und kostengünstig produziert werden.

Wässrige Silansysteme (nachfolgend auch als Sol-Gel-System bezeichnet) können sowohl bei der Metallvorbehandlung als auch für Beschichtungen sowie in Beschichtungsmittel bzw. Coatings sowie als Bestandteil eines Coatings eingesetzt werden.

In DE 102004037045 werden wässrige Silan-Nanokomposite offenbart, die aus einem Glycidyloxypropylalkoxysilan und einem wässrigen Kieselsol hergestellt und in Kratzfestbeschichtungen verwendet werden. Der Nachteil dieser Silan-Nanokomposite ist die hohe Härtungstemperatur von 200 °C.

In EP 1031593 werden wässrige Zusammensetzungen auf Basis aminofunktioneller Siliciumverbindungen, deren Herstellung sowie deren Anwendung beschrieben. Als mögliche Anwendungen werden angegeben: wasserlösliche Haftvermittler, Bestandteil in Beschichtungssystemen sowie als Korrosionsschutzmittel, für die Behandlung von Holz, für elektophotographische Toner, als Bestandteil in Epoxid-, Phenol-, UP- oder Acrylharzen und als Bestandteil in Farben und Lacken.

DE 102006003956 lehrt Zusammensetzungen für Korrosionsschutzschichten auf Metalloberflächen sowie deren Herstellung. Solche Beschichtungen gehen auf ein Produkt zurück, das aus folgenden Komponenten hergestellt wird: Glycidyloxypropylalkoxysilan, Kieselsol, organische Säure und einem Katalysator. Die Härtungstemperatur der Korrosionsschutzschicht wird mit 180 - 220 °C angegeben, unabhängig davon, ob die Schutzschicht als Primer oder Topcoat eingesetzt wird.

In WO 2006/083656 wird die Zusammensetzung einer Beschichtung beschrieben, die sich aus einem Harz, einem Härter, einem Katalysator und einem hydrolysierten Bis-Amino-Silan zusammensetzt. Als Harze werden Polyurethane, (Meth)acrylate, Polyesterharze, Polysiloxane, Fluorpolymere und Epoxyharze angeführt. Erwähnt werden auch geblockte Isocynatoharze, die ab 140 °C vorzugsweise mit einem Epoxyharz reagieren sollen. Die hier beanspruchten Systeme enthalten Lösungsmittel und sind somit nicht VOC-frei.

WO 2009/030538 offenbart VOC-freie wässrige Silansysteme auf Basis von Bis-AMEO und Kokondensaten mit weiteren funktionellen Silanen. Die Systeme härten bei geringer Temperatur und können sowohl als Korrosionsschutzschicht als auch als Primer eingesetzt werden. Solche wässrige Silansysteme enthalten funktionelle Gruppen, die hydrophil sind und dadurch die Silanprodukte wasserlöslich machen. Diese hydrophilen Gruppen haben jedoch den Nachteil, dass Sie nach der Kondensation bzw. Aushärtung nach wie vor vorhanden sind und damit kann die Beschichtung bzw. das gehärtete System besser von wässrigen bzw. hydrophilen Lösungsmitteln angegriffen werden.

Der vorliegenden Erfindung liegt die Aufgabe zugrunde, ein wässriges Silan-System zu entwickeln, das wasserbasierend, VOC-frei und bei einer moderaten Temperatur, bevorzugt unter 180°C, härtend ist. Ferner soll das gehärtete System stabil in Wasser, Säuren und Laugen sein und sowohl als Primer als auch als Top-Coat eingesetzt werden können. So bestand weiter das Anliegen, dass einen gehärtetes System auch besser gegenüber einem Angriff durch Wasser bzw. Lösemittel ausgestattet ist. Darüber hinaus bestand das Anliegen, dass man ein solches System auch im Bereich Korrosionsschutz einsetzten kann.

Die Aufgabe wird erfindungsgemäß entsprechend den Merkmalen der Patentansprüche gelöst.

So wurde in überraschender Weise gefunden, dass man mit wässrigen geblockten Polyisocyanat-Dispersionen und wässrigen Sol-Gel-Systemen vorteilhaft stabile wässrige VOC-freie Systeme herstellen kann. Der pH-Wert der Systeme ist jedoch zu beachten. So ist ein saures Sol-Gel-System mit einer sauren geblockten Polyisocyanat-Dispersion (z.B. VESTANAT® EP-DS 1076) und ein basisches Sol-Gel-System mit einer basischen geblockten Polyisocyanat-Dispersion (Vestanat® EP-DS 1205) durch Mischen zu einer erfindungsgemäßen Formulierung vorteilhaft zu verarbeiten. Die wässrigen Formulierungen werden z.B. auf Oberflächen aufgetragen und erwärmt. Zunächst verdampft das Wasser und die Kondensation startet. Ab 140 °C werden die Isocyanatogruppen deblockiert und die nucleophilen Gruppen wie die Amino-, Epoxy-, Mercapto und/oder OH-Gruppen des Sol-Gel-Systems können mit den Isocyanato-Gruppen reagieren. Dadurch entsteht im Falle einer Amino-Gruppe eine Harnstoffgruppe, die nicht mehr basisch und hydrophil ist. Im Falle einer OH-Gruppe bildet sich eine hydrophobe Urethan-Gruppe. Durch diese zusätzliche Additionsreaktion der hydrophilen funktionellen Gruppen kann das gehärtete System resistenter gegenüber hydrophilen Lösungsmitteln, Wasser, Säuren und Laugen gemacht werden.

Da die Vernetzung bzw. Härtung in 2 Stufen, d.h. durch eine Kondensations- und ab 140 °C auch durch eine Additionsreaktion erfolgt, handelt es sich um ein echtes Hybridcuring (auch Hybridhärtung genannt). Dieses Hybridcuring ist bei allen Sol-Gel-Systemen anwendbar und besonders vorteilhaft bei Systemen, die nucleophile Gruppen tragen. Vorteilhaft kann über die Konzentration der wässrigen geblockten Polyisocyanat-Dispersion im besagten Sol-Gel-System kann nicht nur die Hydrophobie, sondern auch die Flexibilität des Systems eingestellt werden.

Durch Zusatz von Füllstoffen, wie z.B. Korund, Ceroxid, Al₂O₃, Schichtsilikate oder z.B. in Form von Aerosil-Dispersionen, bzw. Nanopartikel, bevorzugt pyrogen hergestellt, insbesondere pyrogene Kieselsäure, kann zusätzlich die Viskosität und die Abrasionsbeständigkeit vorteilhaft eingestellt bzw. verbessert werden. Durch weitere Additive, wie Benetzungsmittel, Filmbildungshilfsmittel oder auch ein Gemisch aus Filmbildungsmitteln sowie Stabilisatoren, beispielsweise UV-Stabilisatoren, können weitere Eigenschaften optimiert werden. Durch organische bzw. anorganische Säuren und Basen kann der pH-Wert der Formulierungen verändert und auf das jeweilige Substrat angepasst werden. Weiterhin können Tenside, langkettige Alkohole, Korrosionsschutzpigmente sowie organische Korrosionsschutzinhibitoren vorteilhaft zugegeben werden.

Unter einem wässrigen Sol-Gel-Systeme bzw. wässrigen Silan-Systeme (auch kurz als Hydrosil-Systeme bezeichnet), welche eine Komponente als Basis für erfindungsgemäße Zusammensetzungen darstellen, werden wässrige Systeme verstanden, die ein Gemisch wasserlöslicher, praktisch vollständig hydrolysierter Organosiloxane darstellen und die neben Hydroxy-Gruppen sowie als Organofunktionalität bevorzugt Alkyl-, Fluoralkyl-, Aminoalkyl-, Glycidyloxyalkyl-, und/oder Mercaptoalkyl-Gruppen enthalten, wie sie beispielsweise -aber nicht ausschließlich- aus EP 06752128, EP 0176127, EP 0176128, EP 0832911, EP 0846716, EP 0846717, EP 1101787, EP 1651733, EP 1773917, EP 1773958, EP 1976946 (DE 102006003956) sowie WO 2009/030538 zu entnehmen sind. Besagte wässrige Sol-Gel-Systeme sind praktisch vollständig hydrolysiert und in der Regel VOC-frei, so ist nach chemischem Verständnis nicht ganz auszuschließen, dass optional ggf. doch noch ein sehr geringen Anteil an Alkoxygruppen im System vorliegt. Bevorzugte Beispiele für wässrigen Sol-Gel-Systeme im Rahmen der vorliegenden Erfindung sind u. a. Dynasylan® HS 1151, Dynasylan® HS 2627, Dynasylan® HS 2909, Dynasylan® HS 2926, Dynasylan® HS 2775, Dynasylan® HS 2776, Dynasylan® F 8815, Dynasylan® SIVO 110, Dynasylan® SIVO 160 oder auch Mischungen aus mindestens zwei der zuvor genannten Systeme, wie sie von Evonik zu beziehen sind (vgl. auch die erfindungsgemäßen Beispiele).

So werden im Sinne der vorliegenden Erfindung hybridhärtende Systeme für Oberflächenbeschichtungen beschrieben, die auf wasserbasierten, d.h. wässrigen Silansystemen und aus wässrigen Polyisocyanatsystemen, vorzugsweise wässrige geblockte Polyisocyanat-Dispersionen, insbesondere saure Polyisocyanat-Dispersionen, beispielsweise VESTANAT® EP-DS 1076, basieren und einen pH-Werte ≤ 7 aufweisen. Aus diesen Systemen können vorteilhaft einkomponentige Formulierungen für Beschichtungen hergestellt werden. Die Härtungstemperatur solcher Systeme liegt in der Regel bei über 100 °C, wobei die Isocyanato-Gruppen in der Regel ab 140°C zur Reaktion kommen und so vorteilhaft eine Hybridhärtung des erfindungsgemäßen Systems erzielt wird.

Es besteht aber auch die Möglichkeit, für die Bereitstellung eines erfindungsgemäßen hybridhärtenden Systems ungeblockte, wässrige Isocyanat-Dispersionen und mindestens ein wasserbasierten Silan- bzw. Sol-Gel-System einzusetzen. So können im Rahmen der vorliegenden Erfindung Formulierungen mit begrenzter Haltbarkeit ("pot life") hergestellt werden, die vorteilhaft auch bereits bei geringen Temperaturen härten, vorzugsweise deutlich unter 100°C. Ferner können ungeblockte wässrige Isocyanat-Dispersionen mit Polyolen und wässrigen Silansystemen formuliert werden. Damit die Anzahl der Komponenten nicht zu groß wird, können die wässrigen Silansysteme unter Umständen zusammen mit dem Polyolen als ein System angeboten werden.
So kann man zunächst z.B. das ungeblockte Isocyanatsystem in Wasser dispergiert und anschließend mit einem Polyol enthaltenen, wässrigen Silansystem, optional mit oder ohne Füllstoffe(n), formulieren.

Im Rahmen der vorliegenden Erfindung sind somit unter dem Begriff "wässrige Polyisocyanat-Dispersionen" sowohl "wässrige geblockte Polyisocyanat-Dispersionen" als auch "wässrige ungeblockte Isocyanat-Dispersionen" zu verstehen.

Gegenstand der vorliegenden Erfindung sind daher wässrige Zusammensetzungen, die auf
- mindestens einer wässrigen Polyisocyanat-Dispersion, die einen pH-Wert ≤ 7 aufweist, und
- mindestens einem wässrigen Sol-Gel-System
basieren,
wobei die gesamte Zusammensetzung einen pH-Wert ≤ 7 aufweist.

Bevorzugt basiert eine erfindungsgemäße Zusammensetzung auf mindestens einem sauren wässrigen Sol-Gel-System, wie sie beispielsweise -aber nicht ausschließlich- aus EP 06752128, EP 0176127, EP 0176128, EP 0832911, EP 0846716, EP 0846717, EP 1101787, EP 1651733, EP 1773917, EP 1773958, EP 1976946 (DE 102006003956) sowie WO 2009/030538 zu entnehmen ist, deren Inhalte hier gleichzeitig als Offenbarung zu lesen sind.

Insbesondere bevorzugt man als wässrige Sol-Gel-Systeme im Rahmen der vorliegenden Erfindung Dynasylan® HS 2909, Dynasylan® HS 2926, Dynasylan® HS 1151, Dynasylan® HS 2775, Dynasylan® HS 2776, Dynasylan® HS 2627, Dynasylan® F 8815, Dynasylan® SIVO 160 Dynasylan® SIVO 110 oder auch Mischungen aus mindestens zwei der zuvor genannten Systeme.

Ferner basiert eine erfindungsgemäße Zusammensetzung bevorzugt auf mindestens einer wässrigen geblockten Polyisocyanat-Dispersion, wie Vestanat® EP-DS 1076, oder einer wässrigen ungeblockten Isocyanat-Dispersion.

Kommerzielle sind wässrige Polyisocyanat-Dispersionen beispielsweise unter Bayhydrol®, Crelan® (Bayer), Coronat® (Nippon Polyurethane), Vestanat® (Evonik), Takenat® (Takeda) sowie Duranat® (Asahi) erhältlich.

Darüber hinaus kann ein erfindungsgemäße Zusammensetzung vorteilhaft als mindestens eine weitere Komponente eine organische oder anorganische Säure, vorzugsweise Ameisensäure, Essigsäure, wässrige HCl, eine organische oder anorganische Base, vorzugsweise Dimethylaminoethanol, insbesondere jeweils zur Einstellung des pH-Werts in einer erfindungsgemäßen Zusammensetzung, einen Füllstoff, vorzugsweise Aluminiumoxid, Korund, Siliciumoxid, pyrogene Kieselsäure, Ceroxid, Schichtsilikate und/oder Nanopartikel, ein Benetzungsmittel, einen Filmbildungsmitteln, ein Filmbildungshilfsmittel, einen Stabilisator, einen UV-Stabilisator, ein Tensid, einen langkettigen Alkohol, ein Polyol, ein Korrosionsschutzpigment, einen organischen Korrosionsschutzinhibitor oder eine Mischung aus mindestens zwei der zuvor genannten Komponenten enthalten.

Die Herstellung einer erfindungsgemäßen Zusammensetzung erfolgt in der Regel durch Zusammengeben und Mischen der jeweiligen Komponenten sowie optional die Einstellung des pH-Werts durch Zugabe einer entsprechenden Menge an einer bereits oben genannten Säure oder Base, wie es dem Fachmann für die Zubereitung einer Mischung geläufig ist. Den pH-Wert in einer wässrigen Zusammensetzung kann der Fachmann, wie an sich bekannt, beispielsweise mit Hilfe von pH-Papier (wie von Merck vertrieben) bestimmen.

So hergestellt, können erfindungsgemäßen Zusammensetzungen vorteilhaft zur Hydrophobierung und/oder Oleophobierung von Substratoberflächen, beispielsweise -aber nicht ausschließlich- solche Substrate mit freien Hydroxyfunktionen, verwendet werden. Durch die Vernetzung mit den Hydroxyfunktionen und/oder über eine mögliche Komplexbildung und/oder Reaktion der Aminofunktionen kann vorteilhaft eine hohe Festigkeit der aufgebrachten Schicht auf den Substratoberflächen erzielt werden. Allgemein können erfindungsgemäße Zusammensetzungen oder daraus herstellbare Formulierungen zur Behandlung oder Modifizierung von Substratoberflächen, insbesondere zum Aufbau von Barriereschichten auf Substratoberflächen genutzt werden. Bevorzugt werden die Zusammensetzung bzw. Mischungen zur Hydrophobierung von Metalloberflächen, wie beispielsweise Edelstahl, Aluminium, Stahl, Titan, von Glasoberflächen, organischen Materialien, wie Kunststoffoberflächen oder, insbesondere von Naturfasern, wie beispielsweise Papier, Baumwolle oder Holz, von mineralischen Oberflächen, wie Beton, Ziegelsteinen, Sandstein sowie weitere anorganische Oberflächen eingesetzt. Basieren erfindungsgemäße Zusammensetzungen auf Siliciumverbindungen enthaltend Fluorfunktionalitäten, in Form von Co-Kondensaten oder in der Mischung, dann können auch oleophobe Eigenschaften, insbesondere Anti-Graffiti-Eigenschaften erzielt werden. Weitere Anwendungsgebiete erschließen sich, bei der Primerung/Behandlung von Oberflächen, aus Glas, Metall, mineralischen Oberflächen, wie Beton, Mörtel, Estrich oder Sandstein, oder organischen Materialen, insbesondere von Naturfasern, wie beispielsweise Papier, Baumwolle oder Holz. Beispielsweise durch die Primerung von Metalloberflächen kann eine verbesserte Haftung und damit unter anderem eine besserer Korrosionsschutz erreicht werden. Als Lacke können - um nur einige Beispiele zu nennen - vorteilhaft Pulverlacke, 2K-PU-Lacke, UV-Lacke, Polyesterlacke, Epoxylacke, Alkydharze, Acrylat-Dispersionen Ebenfalls kann man eine erfindungsgemäße Zusammensetzung oder eine Formulierung, die auf einer solchen Zusammensetzung basiert, vorteilhaft auch als Top-Coat bzw. als Beschichtung zum Korrosionsschutz von Metallen, wie Eisen, sandgestrahlter Stahl, sandgestrahltes Eisen, Stahl, Edelstahl, feuerverzinkter Stahl, galvanisch verzinkter Stahl, Aluminium, eloxiertes Aluminium, nicht verdichtetes eloxiertes Aluminium, kaltverdichtetes eloxiertes Aluminium, Aluminiumlegierungen, Silber, Kupfer, - um nur einige Beispiele zu nennen - verwenden. Dabei können die vor Korrosion zu schützenden Metalle bzw. Metalloberflächen unbehandelt oder vorbehandelt sein, insbesondere sind als Beispiele für behandelte Metalloberflächen phosphatierte, chromatierte, chromitierte, verzinkte Metalloberflächen oder verzinkte Metalloberflächen, die zusätzlich chromatiert, chromitiert oder phosphatiert sein können, zu nennen. Unter chromatierten Metalloberflächen versteht man im Allgemeinen solche, die mit einem Chrom(VI)-haltigen Mittel behandelt bzw. passiviert sind. Analog dazu versteht man hier unter einer chromitierten Metalloberfläche solche, die mit einem Chrom(III)-haltigen Mittel behandelt bzw. passiviert sind. Zudem können erfindungsgemäße Zusammensetzungen zur Gesteinsverfestigung bei der Herstellung von Beton- und/oder Mörtelfertigbauteilen, wie Rohren etc., oder in wässrigen Lack- oder Harz-Formulierungen vorteilhaft eingesetzt werden.

Gemäß einer weiteren Anwendungsmöglichkeit können erfindungsgemäße Zusammensetzungen, insbesondere durch Zugabe von Additiven und/oder Füllstoffen in ihren Produkteigenschaften weiter modifiziert werden. So kann beispielsweise durch Zugabe eines Fließhilfsmittels eine verbesserte Verteilung auf einer Oberfläche erzielt werden. Durch Zugabe von Katalysatoren, beispielsweise Zirkon-n-propylat, oder eine Modifizierung des pH-Wertes kann die Aushärtung der fertigen Zusammensetzung beschleunigt werden. Weitere Anwendungen ergeben sich als Kratzfestbeschichtung auf Substratoberflächen, beispielsweise auf Kunststoffen, wie MMA, PC, auf Kunststein, auf Holz, auf mineralischen Oberflächen, wie Beton, Stein, insbesondere Steinarbeitsplatten, Keramiken, wie Fliesen, auf Metall, um nur einige Beispiele zu nennen.

Gegenstand der vorliegenden Erfindung ist daher ebenfalls die Verwendung einer erfindungsgemäßen Zusammensetzung zur Behandlung, Beschichten oder Modifizierung von Substratoberflächen, zur Hydrophobierung und/oder Oleophobierung von Substratoberflächen, zur Verfestigung und/oder Härtung von Substratoberflächen, zum Aufbau von Barriereschichten auf Substratoberflächen, zur Verfestigung von Substraten sowie zur Gesteinsverfestigung, als Primer und/oder Haftvermittler auf Substratoberflächen, zur Ausstattung von Substratoberflächen mit Anti-Graffiti-Eigenschaften, wobei bezüglich der zuvor genannten Anwendungen als Substrate insbesondere zu nennen sind anorganische bzw. mineralische Substrate, Stein,

Steinarbeitsplatten, Sandstein, Beton, Mörtel, Estrich, Betonfertigbauteile, Mörtelfertigbauteile, Abwasserrohre, anorganische Pigmente, Füllstoffe, Kieselsäure, Glas, Glasfaser, Keramik, Keramikfaser, Fliesen, Ziegelsteine, Baustoffe, Metalle, Eisen, Metalllegierungen, Stahl, Edelstahl, Aluminium, Aluminiumlegierungen, Magnesium, Magnesiumlegierungen, Titan, Titanlegierungen, Silber, Kupfer, Chrom, Nickel, Messing, Zink, organische Materialien, Kunststoffe, MMA, PC, Folien, Kunststein, Holz, Papier, Pappe, Pressspan, Furnier, Textilien, Baumwolle, Naturfasern;
zur Behandlung, Beschichtung und Korrosionsschutz von Metalloberflächen, wie Eisen, Metalllegierungen, Stahl, Edelstahl, sandgestrahlter Stahl, sandgestrahltes Eisen, feuerverzinkter Stahl, galvanisch verzinkter Stahl, Aluminium, eloxiertes Aluminium, nicht verdichtetes eloxiertes Aluminium, kaltverdichtetes eloxiertes Aluminium, Aluminiumlegierungen, Magnesium, Magnesiumlegierungen, Titan, Titanlegierungen, Silber, Kupfer, Chrom, Nickel, Messing, Zink sowie phosphatierte, chromatierte, chromitierte, verzinkte Metalloberflächen; als Lack oder als Komponente in Lackformulierungen, in Harzen oder Dispersionen, wie Topcoats, Klarlacke, wässrige Lacke, Pulverlacke, 2K-PU-Lacke, UV-Lacke, Polyesterlacke, Epoxylacke, Alkydharze, Acrylat-Dispersionen.

Darüber hinaus kann man vorteilhaft beschichtete oder verfestigte Produkte bereitstellen, die durch Verwendung einer erfindungsgemäßen Zusammensetzung erhältlich sind. Zu nennen sind hier insbesondere beschichtete Gläser, beschichtetes Acrylglas, korrosionsgeschützte Metalle oder korrosionsgeschützte, mineralische Substrate, wie ausgehärteter Beton oder Mörtel, oder entsprechend behandelte organische Materialien, insbesondere Produkte aus behandelten oder beschichteten Naturfasern. Beispiele dafür sind mit einer erfindungsgemäßen Zusammensetzung behandelte Bewehrungen, die vor ihrer Verwendung im Beton mit der Zusammensetzung beschichtet werden. Zudem kann auch eine noch nicht ausgehärtete Betonmischung mit einer erfindungsgemäßen Zusammensetzung gemischt, verarbeitet und anschließend bei 140 °C aushärten. In diesem Fall ist darauf zu achten, dass die Zusammensetzung verarbeitbar bleibt, beispielsweise durch Einstellen des pH-Wertes oder anderer Parameter. Auf diese Weise können beispielsweise hydrophober, korrosionsbeständiger Beton oder Produkte aus Beton erhalten werden, wie Abflussrohe oder Fertigbauteile für Gebäude. Der so behandelte Beton kann vorteilhaft eine erheblich bessere Korrosionsbeständigkeit gegenüber Umwelteinflüssen aufweisen.

Gegenstand der vorliegenden Erfindung sind daher auch Produkte, die eine Beschichtung aufweisen, welche auf einer Applikation bzw. Anwendung einer erfindungsgemäßen Zusammensetzung basiert.

Die vorliegende Erfindung wird durch die nachfolgenden Beispiele näher erläutert, ohne den Gegenstand zu beschränken:

### Beispiele

### Beispiel 1

### Beschichtung von eloxierten Aluminium-Oberflächen

Eloxierte Aluminiumbleche (Al99,9MgSi0,5; eloxiert auf Schichtstärke ca. 7 µm, nicht verdichtet) wurden mit einer Formulierung aus Dynasylan® SIVO 160, Dynasylan® SIVO 110 und Vestanat EP-DS 1076 im Massenverhältnis 1:1:1 formuliert. Die trübe Lösung wurde mit einem Papiertuch dünn auf die Oberfläche aufgetragen. Anschließend wurde 10 min bei 20 °C getrocknet und 10 min bei 150 °C gehärtet. Zum Vergleich wurde eine Formulierung aus Dynasylan® SIVO 160 und Dynasylan® SIVO 110 aufgetragen und bei identischen Bedingungen gehärtet und dem Belastungstest unterzogen.
So wurden die Beschichtungen zunächst 10 min in einer 0,1 molaren Salzsäure (pH = 1) gelagert und nachfolgend in einer wässrigen alkalischen Lösung (12,7 g NaOH, 4,64 g Na₃PO₄x12 H₂O auf 1 I H₂O) mit einem pH-Wert von 13,5.
Die Beschichtung aus der Formulierung Dynasylan® SIVO 160 und Dynasylan® SIVO 110 zeigten nach dem Belastungstest eine intensive Weißfärbung der Oberfläche, die durch AI-Hydroxid auf der Oberfläche verursacht wird. Dagegen zeigte die erfindungsgemäße Beschichtung aus der Formulierung Dynasylan® SIVO 160, Dynasylan® SIVO 110 und Vestanat EP-DS 1076 keinerlei Veränderungen nach dem Belastungstest.

### Beispiel 2

### Beschichtung von verzinkten Stahlblechen

### (Sendzimirverzinkte Stahlbleche GARDOBOND Entfettet, OEA Automobilqualität)

Folgende Formulierungen wurden eingesetzt:
a) Dynasylan® HS 2926, Dynasylan® SIVO 160im Massenverhältnis 1:1 formuliert; Feststoffgehalt: 22,5 %
b) Dynasylan® HS 2926, Dynasylan® SIVO 160, Vestanat EP-DS 1076 im Massenverhältnis 1:1:1 formuliert; Feststoffgehalt wurde mit der entsprechenden Menge Wasser auf 22,5 % eingestellt.
c) SIVO 110, Dynasylan® SIVO 160, im Massenverhältnis 1:1 formuliert; Feststoffgehalt: 23,25 %
d) SIVO 110, Dynasylan® SIVO 160, Vestanat EP-DS 1076 im Massenverhältnis 1:1:1 formuliert, Feststoffgehalt wurde mit der entsprechenden Menge Wasser auf 23,25 % eingestellt

Die wässrigen Formulierungen wurden mit einer 4 µ Rakel aufgetragen und 10 min bei 20 °C getrocknet. Die Härtung erfolgte 10 min bei 150 °C Ofentemperatur. Die Rückseite der verzinkten Bleche wurde mit Folie abgeklebt. Anschließend wurden die Bleche in einer essigsauren Salzsprühkammer (in Anlehnung an DIN EN ISO 9227) platziert. Nach 24 Stunden wurden die Bleche entnommen und die Beschichtung bewertet:
a) großflächige Korrosion auf der Oberfläche
b) geringe bis mittlere Korrosion an einigen Stellen
c) geringe Korrosion an einigen Stellen
d) keinerlei Korrosion auf der gesamten Fläche zu erkennen

### Beispiel 3

### Beschichtung feuerverzinkter Stahlbleche von Mannesmann

Die feuerverzinkten Stahlbleche wurden mit Ethylacetat gereinigt und anschließend mit folgenden Formulierungen beschichtet:
a) Dynasylan® SIVO 110, Dynasylan® SIVO 160, Vestanat EP-DS 1076 im Massenverhältnis 1:1:1
b) Dynasylan® SIVO 110, Dynasylan® SIVO 160, Vestanat EP-DS 1076, Dynasylan® F 8815 im Massenverhältnis 1:1:1:1
Die Formulierungen wurden mit einer 4 µ Rakel aufgetragen und 10 min bei 20 °C getrocknet. Anschließend wurden die Proben 10 min bei 150 °C gehärtet und einem Kondenswassertest (in Anlehnung an DIN EN ISO 6270-2) unterzogen. Nach 200 h konnte keinerlei Korrosion festgestellt werden.

### Beispiel 4

### Beschichtung von Aluminium-Blechen

Die Aluminium-Bleche wurden zunächst in einem alkalischen Reinigungsbad (Ridoline C72 von Henkel, 10 g pro I) bei 60 °C 10 s gereinigt, mit Wasser gespült und dekapiert (10 s bei 20 °C, 0,2 % H₂SO₄).
Dann wurden folgenden Formulierungen mit einer 4 µ Rakel aufgetragen:
a) Dynasylan® 2926, Dynasylan® SIVO 160, Vestanat EP-DS 1076 im Massenverhältnis 1:1:1. Der pH-Wert wurde mit Dimethylaminoethanol auf 7 eingestellt.
b) Dynasylan® 2926, Dynasylan® SIVO 160, Vestanat EP-DS 1076 im Massenverhältnis 1:1:1. Der pH-Wert konnte mit 3,5 bestimmt werden.
Die Beschichtungen wurden 10 min bei 20 °C getrocknet und anschließend 10 min bei 150 °C gehärtet. Ein 2 K-PU-Lack (Standox, 2-K-KS-Lack und 2-K-Härter MS-X-15-30) wurde mit einer 50 µ Rakel aufgetragen und nach 30 min Lagerung bei 20 °C 30 min bei 80 °C gehärtet.
Für beide Formulierungen wurden die Beschichtungen beim Gitterschnitttest (in Anlehnung an DIN EN ISO 2409) mit 0 bestimmt. Nach 1 h Kochwassertest wurde der Gitterschnitt erneut bestimmt. Es konnte keine Veränderung festgestellt werden (Gitterschnitt 0).

### Beispiel 5

### Kaltgewalzte Stahlbleche

Die Stahlbleche wurden mit Ethylacetat entfettet und anschließend mit folgenden Formulierungen beschichtet:
a) Dynasylan® 2926, Dynasylan® SIVO 160, Vestanat EP-DS 1076 im Massenverhältnis 1:1:1. Der pH-Wert wurde mit Dimethylaminoethanol auf 7 eingestellt.
b) Dynasylan® 2926, Dynasylan® SIVO 160, Vestanat EP-DS 1076 im Massenverhältnis 1:1:1. Der pH-Wert konnte mit 3,5 bestimmt werden.
c) Dynasylan® SIVO 110, Dynasylan® SIVO 160, Vestanat EP-DS 1076 im Massenverhältnis 1:1:1. Der pH-Wert wurde mit Dimethylaminoethanol auf 7 eingestellt.
d) Dynasylan® 2926, Dynasylan® SIVO 160, Vestanat EP-DS 1076 im Massenverhältnis 1:1:1. Die pH-Wert Bestimmung ergab einen pH-Wert von 4,3.
e) Dynasylan® SIVO 110. Der pH-Wert wurde mit Dimethylaminoethanol auf 7 eingestellt.
Die Formulierungen wurden mit einer 4 µ Rakel auf die Stahloberflächen aufgetragen und 10 min bei 20 °C getrocknet und 10 min bei 150 °C gehärtet.
Bei Formulierung d) konnte eine leichte Braunfärbung der Oberfläche festgestellt werden. Die Formulierungen wurden 10 min bei 20 °C getrocknet und anschließend 10 min bei 150 °C gehärtet. Die Proben wurden 1 h in kochendem Wasser gelagert und anschließend beurteilt. Die Beschichtungen a) - d) zeigten keinerlei Veränderungen während die Beschichtungen aus der Formulierung e) eine leichte Delamination aufwies.

### Beispiel 6

### Beschichtungen auf Edelstahl

Die Edelstahlbleche wurden mit Ethylacetat entfettet und anschließend mit folgenden Formulierungen beschichtet:
a) Dynasylan® SIVO 110, Dynasylan® SIVO 160, Vestanat EP-DS 1076 im Massenverhältnis 1:1:1.
b) Dynasylan® SIVO 110, Dynasylan® F 8815, Dynasylan® SIVO 160, Vestanat EP-DS 1076 im Massenverhältnis 1:1:1:1.
Die Formulierungen wurden mit einer 4 µ Rakel aufgetragen und 10 min bei 20 °C getrocknet. Anschließend wurde 10 min bei 150 °C gehärtet.
Die Proben wurden 10 min in 0,1 molare HCl (pH 1) und 10 min in eine wässrige alkalische Lösung (12,7 g NaOH, 4,64 g Na₃PO₄x12 H₂O auf 1 I H₂O) gestellt.
Die Beschichtung aus Formulierung a) zeigt keine Veränderungen nach dem Belastungstest, wogegen die Beschichtung aus Formulierung b) nach der Lagerung in Säure leichte Defekte aufzeigt. Weitere Belastungstest wurden mit Essigreiniger (Frosch, Erdal Rex), scharfem Senf (Löwensenf, Extra) und Backofenreiniger (Sidol, Henkel) durchgeführt. Dazu wurden Proben von 2 cm Durchmesser auf die Oberflächen aufgetragen. Nach einer Stunde wurden die Proben entfernt und die Oberfläche visuell beurteilt. Es konnten keine Veränderungen festgestellt werden.

### Beispiel 7

### Anwendung auf Marmor

Eine Formulierung Dynasylan® SIVO 110, Dynasylan® SIVO 160, Vestanat EP-DS 1076 im Massenverhältnis 1:1:1 wurde mit einer 4 µ Rakel auf den Marmor aufgetragen und 10 min bei 20 °C getrocknet. Anschließend wurde 10 min bei 150 °C Ofentemperatur gehärtet. Die Haftung wurde mit einem Gitterschnitt geprüft (Gitterschnitt 0). Die Oberfläche wurde 1 h mit 1 ml Essig benetzt. Es konnten keine Veränderungen der Oberfläche festgestellt werden.

### Beispiel 8

### Anwendung auf Kunststein

Eine Formulierung Dynasylan® SIVO 110, Dynasylan® SIVO 160, Dynasylan® F 8815, Vestanat EP-DS 1076 im Massenverhältnis 1:1:1 wurde mit einer 4 µ Rakel auf Kunststein (Silestone von Cosentino, Spanien) aufgetragen und 10 min bei 20 °C getrocknet. Anschließend wurde 10 min bei 150 °C Ofentemperatur gehärtet. Die Haftung wurde mit einem Gitterschnitt geprüft (Gitterschnitt 0). Die Oberfläche war hart, kratzfest und sehr einfach zu reinigen.

### Ergebnis aus den Beispielen:

Anhand der vorangehenden Beispiele konnte gezeigt werden, dass durch ein Hybridcuring die Eigenschaften von wässrigen Sol-Gel- bzw. Silansystemen wesentlich verbessert werden können. Mit Hilfe von wässrigen Polyisocyanat-Dispersionen können die hydrophilen funktionellen Gruppen zu hydrophoben Gruppen umgesetzt werden. Darüber hinaus werden neue Vernetzungen geschaffen, die die mechanischen Eigenschaften nicht verschlechtern, sondern verbessern.
Dadurch kann das Eigenschaftsprofil der wasserbasierenden Sol-Gel- bzw. Hydrosil-Systeme enorm verbessert und das Einsatzgebiet erweitert werden.

## Patentansprüche

1. Wässrige Zusammensetzung basierend auf
- mindestens einer wässrigen Polyisocyanat-Dispersion, die einen pH-Wert ≤ 7 aufweist, und
- mindestens einem wässrigen Sol-Gel-System,
wobei die gesamte Zusammensetzung einen pH-Wert ≤ 7 aufweist.

2. Zusammensetzung nach Anspruch 1,
wobei diese auf mindestens einem sauren wässrigen Sol-Gel-System basiert.

3. Zusammensetzung nach Anspruch 1 oder 2,
wobei diese auf mindestens einer wässrigen geblockten Polyisocyanat-Dispersion oder wässrigen ungeblockten Isocyanat-Dispersion basiert.

4. Zusammensetzung nach einem der vorangehenden Ansprüche,
wobei diese als mindestens eine weitere Komponente eine organische oder anorganische Säure, vorzugsweise Ameisensäure, Essigsäure, wässrige HCl, eine organische oder anorganische Base, vorzugsweise Dimethylaminoethanol, einen Füllstoff, vorzugsweise Aluminiumoxid, Korund, Siliciumoxid, pyrogene Kieselsäure, Ceroxid, Schichtsilikate, Nanopartikel, einem Benetzungsmittel, einem Filmbildungsmitteln, einem Filmbildungshilfsmittel, einem Stabilisator, einem UV-Stabilisator, einem Tensid, einem langkettigen Alkohol, einem Polyol, einem Korrosionsschutzpigment, einem organischen Korrosionsschutzinhibitor oder einer Mischung aus mindestens zwei der zuvor genannten Komponenten enthält.

5. Verwendung einer Zusammensetzung nach einem vorangehenden Ansprüche zur Behandlung, Beschichten oder Modifizierung von Substratoberflächen, zur Hydrophobierung und/oder Oleophobierung von Substratoberflächen, zur Verfestigung und/oder Härtung von Substratoberflächen, zum Aufbau von Barriereschichten auf Substratoberflächen, zur Verfestigung von Substraten sowie zur Gesteinsverfestigung, als Primer und/oder Haftvermittler auf Substratoberflächen, zur Ausstattung von Substratoberflächen mit Anti-Graffiti-Eigenschaften,
wobei bezüglich der zuvor genannten Anwendungen als Substrate insbesondere zu nennen sind anorganische bzw. mineralische Substrate, Stein, Steinarbeitsplatten, Sandstein, Beton, Mörtel, Estrich, Betonfertigbauteile, Mörtelfertigbauteile, Abwasserrohre, anorganische Pigmente, Füllstoffe, Kieselsäure, Glas, Glasfaser, Keramik, Keramikfaser, Fliesen, Ziegelsteine, Baustoffe, Metalle, Eisen, Metalllegierungen, Stahl, Edelstahl, Aluminium, Aluminiumlegierungen, Magnesium, Magnesiumlegierungen, Titan, Titanlegierungen, Silber, Kupfer, Chrom, Nickel, Messing, Zink, organische Materialien, Kunststoffe, MMA, PC, Folien, Kunststein, Holz, Papier, Pappe, Pressspan, Furnier, Textilien, Baumwolle, Naturfasern; zur Behandlung, Beschichtung und Korrosionsschutz von Metalloberflächen, wie Eisen, Metalllegierungen, Stahl, Edelstahl, sandgestrahlter Stahl, sandgestrahltes Eisen, feuerverzinkter Stahl, galvanisch verzinkter Stahl, Aluminium, eloxiertes Aluminium, nicht verdichtetes eloxiertes Aluminium, kaltverdichtetes eloxiertes Aluminium, Aluminiumlegierungen, Magnesium, Magnesiumlegierungen, Titan, Titanlegierungen, Silber, Kupfer, Chrom, Nickel, Messing, Zink sowie phosphatierte, chromatierte, chromitierte, verzinkte Metalloberflächen;
als Lack oder als Komponente in Lackformulierungen, in Harzen oder Dispersionen, wie Topcoats, Klarlacke, wässrige Lacke, Pulverlacke, 2K-PU-Lacke, UV-Lacke, Polyesterlacke, Epoxylacke, Alkydharze, Acrylat-Dispersionen.

6. Produkte, die eine Beschichtung aufweisen, welche auf einer Zusammensetzung nach einem der Ansprüche 1 bis 4 oder deren Anwendung nach Anspruch 5 basiert.
